# EUROPÄISCHE PATENTSCHRIFT

(11) **EP 2 897 815 B1**
(45) Veröffentlichungstag und Bekanntmachung des Hinweises auf die Patenterteilung: **11.07.2018**
(21) Anmeldenummer: 13745118.3
(22) Anmeldetag: 06.08.2013
(51) Int. Cl.: B60C 11/13, B60C 11/03

(54) **FAHRZEUGLUFTREIFEN**
VEHICLE PNEUMATIC TYRE
PNEUMATIQUES DE VÉHICULE

(30) Priorität: 20.09.2012 DE 102012108870
(43) Veröffentlichungstag der Anmeldung: 29.07.2015
(73) Patentinhaber: Continental Reifen Deutschland GmbH, 30165 Hannover (DE)
(72) Erfinder: BEHR, Ulrich, Hannover 30167 (DE)
(74) Vertreter: Finger, Karsten
(86) Internationale Anmeldenummer: PCT/EP2013/066430
(87) Internationale Veröffentlichungsnummer: WO 2014/044458

(56) Entgegenhaltungen:
- EP-A1- 1 637 357
- EP-A2- 2 127 905
- EP-A2- 2 465 706
- JP-A- 2001 219 718
- JP-A- 2003 182 312
- JP-A- 2005 231 420
- US-A1- 2006 016 538

## Beschreibung

Die Erfindung betrifft einen Fahrzeugluftreifen für Personenkraftwagen mit einem profilierten Laufstreifen mit einer für den Einsatz am Fahrzeug ausgebildeten, vom Fahrzeug wegweisenden Außenschulter OU und mit zum Fahrzeug hinweisenden Innenschulter IN, mit durch Rillen von einander beabstandeten Profilbändern, beispielsweise Profilrippen oder Profilblockreihen, mit einer in der Außenschulter OU ausgebildeten über den Umfang des Reifens erstreckten Umfangsrille, welche zwei Profilblockreihen axial voneinander trennt, und mit über den Umfang des Reifens hintereinander angeordneten Querrillen, die sich jeweils mit einer in radialer Richtung R gemessenen Tiefe T_{Q} in axialer Richtung von der einen Profilblockreihe über die Umfangsrille hinweg in die andere Profilblockreihe erstrecken, wobei die Tiefe T_{Q} größer ist als die Tiefe T_{U} der Umfangsrille im Erstreckungsbereich zwischen den Querrillen.

Derartige Fahrzeugluftreifen sind bekannt. Die Handlingeigenschaften des Fahrzeugluftreifens werden besonders stark durch die am zur Fahrzeugaußenseite hin ausgebildete Reifenschulter (Außenschulter) und deren Ausbildung beeinflusst. Für besonders gute Trockenhandlingeigenschaften ist dabei eine besonders hohe Umfangs- und Quersteifigkeit des Außenprofils gewünscht, so dass die beim Handling auftretenden Querkräfte schnell und zuverlässig ohne Verzögerungen durch unerwünschte Deformation übertragen werden können. Darüber hinaus ist es für gute Nasshandlingeigenschaften ebenso wichtig, das Wasser zuverlässig gerade in dem für Handling wichtigen Außenschulterbereich aus dem Bereich der Bodenaufstandsfläche abzuführen. Hierzu wird üblicherweise versucht, im Bereich der Außenschulter tiefe, breite Umfangsrillen auszubilden, über die das Wasser in Querrillen abgeführt werden kann. Die Umfangsrillen sind bei derartigen Ausbildungen tiefer ausgebildet als die Querrillen. Dies ermöglicht zwar eine gute Abführung des Wassers aus dem Bereich der Bodenaufstandsfläche innerhalb der Außenschulter, allerdings unter Inkaufnahme von Nachteilen hinsichtlich der Quersteifigkeit des Profils und somit der Handlingeigenschaften auf trockener und nasser Straße. Es ist auch bekannt, im Bereich der Außenschulter die Umfangsrillen mit geringerer Tiefe auszubilden als die Querrillen, welche die Umfangsrille queren. Hierdurch wird zwar eine erhöhte Quersteifigkeit ermöglicht, wodurch die Handlingeigenschaften auf trockener und auch auf nasser Straße etwas verbessert werden können. Allerdings wird der Wasserabfluss aus dem Bereich der Bodenaufstandsfläche in der Außenschulter beeinträchtigt, wodurch die Nassgriffeigenschaften und auch die Nasshandlingeigenschaften verschlechtert werden können. Durch eine Verbreitung der Umfangsrillen kann zwar der Wasserabfluss beim Neureifen wiederum verbessert werden, allerdings wieder unter Inkaufnahme einer Reduktion der Quersteifigkeit sowie von Bodenkontaktfläche und somit der Handlingeigenschaften auf nasser und trockener Straße.

**Aus der** JP 2005 231420 A **ist es bekannt, in der Reifenschulter Umfangsrillen auszubilden, in die Querrillen einmünden, wobei die Umfangsrillen mit ihrem Rillengrund zwischen den einmündenden Querrillen treppenartige Anhebungen aufweisen.**

**Aus der** EP 2465706 A2 **ist ein Fahrzeugluftreifen gemäß den Merkmalen des Oberbegriffs vom Anspruch 1 bekannt.**

Der Erfindung liegt daher die Aufgabe zugrunde, bei derartigen Fahrzeugluftreifen den Zielkonflikt Trockenhandling - Nasshandling auf ein höheres Niveau anzuheben.

Die Aufgabe wird erfindungsgemäß durch die Ausbildung eines Fahrzeugluftreifens für Personenkraftwagen mit einem profilierten Laufstreifen mit einer für den Einsatz am Fahrzeug ausgebildeten, vom Fahrzeug wegweisenden Außenschulter OU und mit zum Fahrzeug hinweisenden Innenschulter IN, mit durch Rillen von einander beabstandeten Profilbändern, beispielsweise Profilrippen oder Profilblockreihen, mit einer in der Außenschulter OU ausgebildeten über den Umfang des Reifens erstreckten Umfangsrille, welche zwei Profilblockreihen axial voneinander trennt, und mit über den Umfang des Reifens hintereinander angeordneten Querrillen, die sich jeweils mit einer in radialer Richtung R gemessenen Tiefe T_{Q} in axialer Richtung von der einen Profilblockreihe über die Umfangsrille hinweg in die andere Profilblockreihe erstrecken, wobei die Tiefe T_{Q} größer ist als die Tiefe T_{U} der Umfangsrille im Erstreckungsbereich zwischen den Querrillen, gemäß den Merkmalen von Anspruch 1 gelöst, bei dem die Umfangsrille jeweils in den Erstreckungsabschnitten zwischen den in Umfangsrichtung U benachbarten Querrillen längs der Erstreckung in die eine Drehrichtung D des Reifens ausgehend von der in Drehrichtung D vorgeordneten Querrille bis zur in Drehrichtung D nachgeordneten Querrille ausgehend von einer maximalen Tiefe t_{UMax} mit einer durch treppenartige Anhebung des Rillengrundes mit wenigstens einer Stufe ausgebildeten Reduktion der Tiefe t_{U} bis zu einer minimalen Tiefe t_{UMin} und mit einer im radial inneren Erstreckungsabschnitt der Umfangsrille der Erstreckungshöhe h mit h < t_{U} stetig abnehmenden Breite b der Rille ausgebildet ist.

Durch diese Ausbildung wird ermöglicht, dass eine hohe Quersteifigkeit der Außenschulter aufgrund der geringen Tiefe der Umfangsrille sichergestellt werden kann, wodurch Trockenhandlingeigenschaften auf hohem Niveau erzielbar sind. Trotzdem kann durch die gezielte Veränderung der Rillenkontur mit sowohl stufenweise Anhebung des Rillengrundes zwischen den Querrillen als auch verändertem Breitenverlauf ermöglicht werden, dass das Wasser durch die Umfangsrille hindurch in die Querrille gepresst wird und somit ein verbesserter Wasserabfluss gewährleistet wird. Das Nassgriffverhalten kann hierdurch deutlich verbessert werden. Die stufenweise Anhebung des Umfangsrillengrundes sowie die kontinuierliche Abnahme der Rillenbreite ermöglichen darüber hinaus eine weitere Versteifung des Profils im Bereich der für die Handlingeigenschaften wichtigen Außenschulter, wodurch die Handlingeigenschaften zusätzlich verbessert werden können.

Besonders vorteilhaft ist die Ausbildung eines Fahrzeugreifens gemäß den Merkmalen von Anspruch 2, bei dem längs der Erstreckung der Umfangsrille in diese Drehrichtung die Breite der Umfangsrille in der Position der Querrille sprunghaft vergrößert ist. Hierdurch kann das Wasser gezielt und besonders wirkungsvoll in die in Drehrichtung D nachgeordnete Querrille abgeleitet werden.

Besonders vorteilhaft ist die Ausbildung eines Fahrzeugreifens gemäß den Merkmalen von Anspruch 3, wobei die Umfangsrille in axialer Richtung zur Außenschulter OU von einer ersten Flanke und zur Innenschulter IN hin von einer zweiten Flanke begrenzt wird, wobei die Umfangsrille in den zwischen benachbarten Querrillen ausgebildeten Umfangsabschnitten in komplanar zur Reifenachse ausgebildeten Querschnittebenen mit ihren ersten Flanke einen Neigungswinkel β zur Radialen mit 0° ≤β≤60° und mit ihrer zweiten Flanke einen Neigungswinkel α zur Radialen mit 0° ≤α≤60° einschließt. Hierdurch kann sowohl das Einfließen des Wassers in die Umfangsrille als auch die kanalisierte Ableitung in die Querrille weiter verbessert werden. Darüber hinaus kann eine zusätzliche Stabilisierung des Gummimaterials im Bereich der durch die Umfangsrille an der radial äußeren Oberfläche gebildeten Griffkanten ermöglicht werden.

Besonders vorteilhaft ist die Ausbildung eines Fahrzeugreifens gemäß den Merkmalen von Anspruch 4, wobei die Umfangsrille in axialer Richtung zur Außenschulter OU von einer ersten Flanke und zur Innenschulter IN hin von einer zweiten Flanke begrenzt wird, wobei die Umfangsrille in den zwischen benachbarten Querrillen ausgebildeten Umfangsabschnitten in komplanar zur Reifenachse ausgebildeten Querschnittebenen mit ihren ersten Flanke einen Neigungswinkel β zur Radialen und mit ihrer zweiten Flanke einen Neigungswinkel α zur Radialen einschließt, wobei wenigstens einer der beiden Neigungswinkel - insbesondere beide Neigungswinkel - längs der Erstreckung zwischen den Querrillen stetig verändert sind. Hierdurch kann sowohl das Einfließen des Wassers in die Umfangsrille als auch die kanalisierte Ableitung in die Querrille weiter verbessert werden. Darüber hinaus kann eine zusätzliche Stabilisierung des Gummimaterials im Bereich der durch die Umfangsrille an der radial äußeren Oberfläche gebildeten Griffkanten ermöglicht werden.

Besonders vorteilhaft ist die Ausbildung eines Fahrzeugreifens gemäß den Merkmalen von Anspruch 5, wobei die Umfangsrille in axialer Richtung zur Außenschulter OU von einer ersten Flanke und zur Innenschulter IN hin von einer zweiten Flanke begrenzt wird, wobei eine der beiden Flanken - insbesondere beide Flanken - in der radial äußeren, die Profilblockreihen nach radial außen begrenzenden Oberfläche jeweils zwischen den benachbarten Querrillen geradlinig in Umfangsrichtung erstreckt ausgebildet sind. Hierdurch kann die Durchleitung des Oberflächenwassers durch die Umfangsrille innerhalb des Footprints weiter verbessert werden.

Besonders vorteilhaft ist die Ausbildung eines Fahrzeugreifens gemäß den Merkmalen von Anspruch 6, wobei die Umfangsrille jeweils in den Erstreckungsabschnitten zwischen den in Umfangsrichtung benachbarten Querrillen längs der Erstreckung in die eine Drehrichtung des Reifens ausgehend von der in Drehrichtung vorgeordneten Querrille bis zur nachgeordneten Drehrichtung ausgehend von einer maximalen Tiefe T_{UMax} mit einer durch treppenartige Anhebung des Rillengrundes mit maximal zwei Stufen ausgebildeten Reduktion der Tiefe T_{U} bis zu einer minimalen Tiefe T_{UMin} ausgebildet ist. Hierdurch wird eine sichere, verbesserte kanalisierte Ableitung des Wassers bei ausreichender Rillentiefe zur Aufnahme von Wasser ermöglicht.

Besonders vorteilhaft für eine optimale Querentwässerung ist die Ausbildung eines Fahrzeugreifens gemäß den Merkmalen von Anspruch 7, wobei die Tiefe T_{Q} mit T_{Q} = P_{T} ausgebildet ist, wobei die P_{T} Profiltiefe ist.

Besonders vorteilhaft ist die Ausbildung eines Fahrzeugreifens gemäß den Merkmalen von Anspruch 8, wobei die Tiefe T_{UMax} mit (1/3)P_{T} ≤ T_{UMax} ≤ (2/3) P_{T} ausgebildet ist. Diese Ausbildung stellt einen guten Kompromiss zur optimierten Lösung des Konfliktes aus "gute Entwässerung" und "gute Trockenhandlingeigenschaften" dar.

Besonders vorteilhaft ist die Ausbildung eines Fahrzeugreifens gemäß den Merkmalen von Anspruch 9, wobei die Tiefe T_{UMin} mit 1mm ≤ T_{UMin} ≤ (1/3)P_{T} ausgebildet ist. Die Ausbildung sichert eine ausreichend hohe Quersteifigkeit für gute TrockenhandlingEigenschaften und ermöglicht dennoch die Sicherstellung eines ausreichenden Gefälles des Rillengrundes zur Erzielung einer guten Ableitung des Wassers.

Besonders vorteilhaft ist die Ausbildung eines Fahrzeugreifens gemäß den Merkmalen von Anspruch 10, wobei die Stufe der treppenartigen Anhebung des Rillengrundes mit einer Stufenhöhe tₛ ausgebildet ist mit 1mm ≤ tₛ ≤ 3mm. Hierdurch kann eine vergleichmä0gite Steifigkeit in Umfangsrichtung bei optimaler Fallstufe des Rillengrundes zur kanalisierten Ableitung des Wassers ermöglicht werden.

Besonders vorteilhaft ist die Ausbildung eines Fahrzeugreifens gemäß den Merkmalen von Anspruch 11, wobei der Rillengrund der Umfangsrille im Erstreckungsbereich zwischen den Querrillen in Drehrichtung gesehen ausgehend von der vorgeordneten Querrille bis zur Stufe und von der Stufe bis zur nachgeordneten Querrille kontinuierlich ansteigt. Dies ermöglicht eine optimierte Kanalisierungswirkung für den Abfluss des Wassers.

Die Erfindung wird im Folgenden an Hand der in den Figuren 1 bis 6 dargestellten Ausführungsbeispiele näher erläutert. Hierin zeigen
- Fig. 1: einen Umfangsabschnitt eines Fahrzeugluftreifens für Pkw-Fahrzeugreifen in Draufsicht,
- Fig. 2: das Profilband der Reifenaußenschulter von Fig.1 in Draufsicht,
- Fig. 3: eine Schnittdarstellung des Profilbandes von Fig.2 gemäß Schnitt III-III von Fig.2,
- Fig. 4: das Profilband von Fig.2 in Schnittdarstellung gemäß Schnitt IV-IV von Fig.2,
- Fig. 5: das Profilband von Fig.2 in Schnittdarstellung gemäß Schnitt V-V von Fig.2 und
- Fig. 6: das Profilband von Fig. 2 in Schnittdarstellung gemäß Schnitt VI-VI von Fig.2

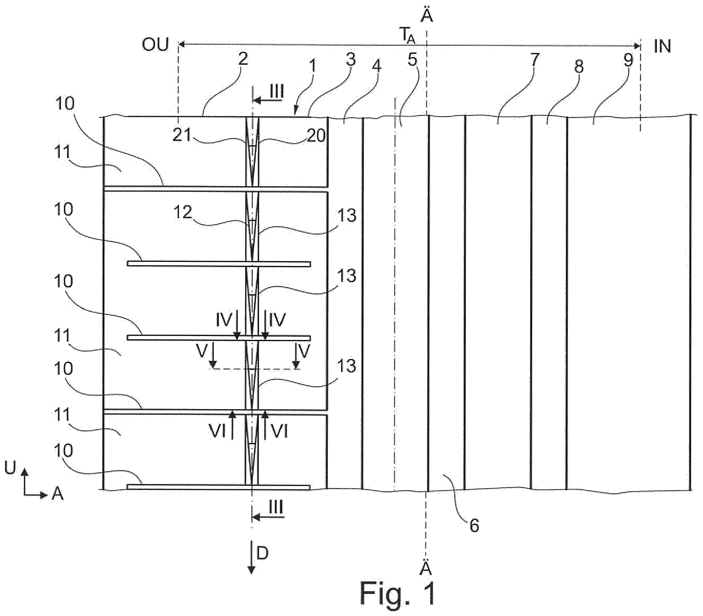

Fig. 1 zeigt beispielhaft einen Fahrzeugluftreifen für Personenkraftwagen (PKW) mit einem asymmetrischem Laufstreifenprofil, welches mit einer in axialer Richtung A des Reifens speziell für den Einsatz am Fahrzeug zu der vom Fahrzeug weg weisenden Reifenaußenschulter OU und einer zum Fahrzeug hin weisenden Reifeninnenschulter IN ausgebildet ist. Der Fahrzeugluftreifen ist aus mehreren in axialer Richtung A des Fahrzeugluftreifens nebeneinander ausgebildeten, radial erhabenen Profilbändern 1, 5, 7 und 9 ausgebildet, welche jeweils durch Umfangsrillen 4, 5 bzw. 7 voneinander beabstandet sind. Das Profilband 1 ist dabei im Bereich der Reifenaußenschulter OU ausgebildet. Das Profilband 9 ist im Bereich der Reifeninnenschulter IN ausgebildet. Die Profilbänder 5 und 7 sind im zentralen mittleren Erstreckungsbereich zwischen Reifenaußenschulter und Reifeninnenschulter ausgebildet.

Die Profilbänder 5, 7 und 9 sind dabei entweder als Profilblockreihen bekannter Art oder - wie in Fig. 1 dargestellt ist - als Umfangsrippen bekannter Art ausgebildet, welche sich über den gesamten Umfang des Fahrzeugluftreifens erstrecken und in Umfangsrichtung U des Fahrzeugluftreifens ausgerichtet sind. Die Umfangsrillen 4, 5 und 8 erstrecken sich ebenfalls in Umfangsrichtung U ausgerichtet über den gesamten Umfang des Fahrzeugreifens.

Das in der Reifenaußenschulter OU ausgebildete Profilband 1 ist aus zwei in axialer Richtung A nebeneinander angeordneten und durch eine Umfangsrille 12 voneinander beabstandeten Profilblockelementreihen 2 und 3 ausgebildet, welche sich jeweils über den gesamten Umfang des Fahrzeugluftreifens in Umfangsrichtung U ausgerichtet erstrecken. Die Profilblockreihe 3 ist in axialer Richtung A in Richtung zur Innenschulter IN hin durch die Umfangsrille 4 begrenzt und zur vom Fahrzeug weg weisenden Außenseite OU durch die Umfangsrille 12 begrenzt. Die Profilblockelementreihe 2 ist in axialer Richtung A in Richtung zur Innenschulter IN durch die Umfangsrille 12 begrenzt.

Die Breite T_{A} der Bodenaufstandsfläche (Bodenaufstandsbreite) erstreckt sich in axialer Richtung A aus dem axialen Erstreckungsbereich der Profilblockreihe 2 bis in den axialen Erstreckungsbereich der Umfangsrippe 9. Die Bodenaufstandsbreite T_{A} ist die Breite des den Boden berührenden Teils des Laufstreifens, welcher dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die Profilblockreihen 2 und 3 sowie die Umfangsrippen 5, 7 und 9 sind in radialer Richtung R nach außen hin jeweils durch eine innerhalb der Bodenaufstandsbreite T_{A} die Bodenkontaktoberfläche bildende radial äußere Oberfläche 17 begrenzt.

Die Umfangsrille 4 ist in radialer Richtung R nach innen hin mit der maximalen Profiltiefe P_{T} ausgebildet, welche sich von der radial äußeren Oberfläche 17 in radialer Richtung R bis zum Profilgrund der Umfangsrille 4 erstreckt.

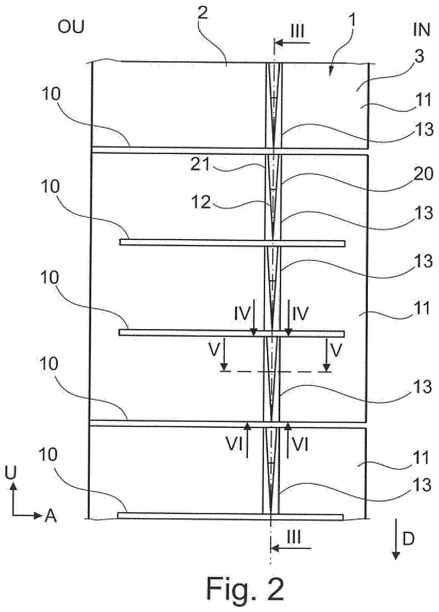

Die Umfangsrille 12 erstreckt sich über den gesamten Umfang des Fahrzeugluftreifens und ist in Umfangsrichtung U ausgerichtet. Im Profilband 1 sind über die gesamte Erstreckung des Profilbandes lin Umfangsrichtung U verteilt hintereinander eine Vielzahl von Querrillen 10 ausgebildet, welche sich in axialer Richtung A ausgehend vom axialen Erstreckungsbereich außerhalb der Bodenaufstandsbreite T_{A} in der Profilblockreihe 2 in axialer Richtung A in Richtung zur Innenschulter IN über den axialen Erstreckungsbereich der Umfangsrille 12 hinweg bis in die Profilblockreihe 3 erstrecken. Bei dem in Fig. 1 und 2 dargestellten Ausführungsbeispiel erstrecken sich dabei ein Teil der Querrillen 10 bis in die Umfangsrille 4 hinein und ein anderer Teil der Querrillen 10 endet innerhalb der Profilblockreihe 3 mit Abstand zur Umfangsrille 4 und zur Umfangsrille 12. Die Querrillen 10 sind dabei in radialer Richtung R mit einer ausgehend von der radial äußeren Oberfläche 17 bis zu ihrem die jeweilige Querrille nach radial innen hin begrenzenden Rillengrund 15 gemessenen Tiefe t_{Q} ausgebildet, welche der Profiltiefe P_{T} des Reifens entspricht.

Die Umfangsrille 12 ist ausgehend von der radial äußeren Oberfläche 17 der sie begrenzenden Profilblockreihen 1 und 2 mit einer in radialer Richtung R nach innen hin gemessenen Rillentiefe t_{U} ausgebildet. In dem zwischen zwei in Umfangsrichtung U des Reifens hintereinander angeordneten Querrillen 10 ausgebildeten Erstreckungsabschnitt 13 der Umfangsrille 12 ist die Rillentiefe t_{U} jeweils kleiner ausgebildet als die Tiefe t_{Q} der beiden Querrillen 10. Somit schneidet jede der Querrillen 10 jeweils die Umfangsrille 12 zwischen zwei hintereinander angeordneten Umfangserstreckungsabschnitten 13 mit einer gegenüber der Tiefe t_{U} der Umfangsrille größeren Tiefe t_{Q}. Die Querrillen 10 unterteilen somit die Umfangsrille 12 in eine Vielzahl von in Umfangsrichtung U hintereinander angeordneten und jeweils von zwei Querrillen 10 in Umfangsrichtung U begrenzten Umfangserstreckungsabschnitten 13.

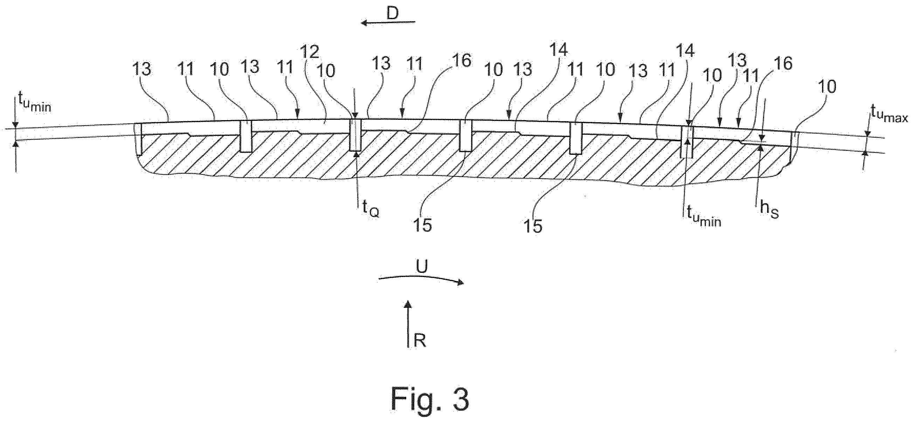

Wie in den Figuren 3, 4, 5 und 6 zu erkennen ist, ist dabei die Umfangsrille 12 in jedem Umfangserstreckungsabschnitt 13 längs ihrer Erstreckung in der in Fig.3 mit Pfeil kennzeichnenden Drehrichtung D des Fahrzeugluftreifens ausgehend von der in Drehrichtung D dem jeweiligen Umfangserstreckungsabschnitt 13 vorangeordneten Querrille 10 bis zu der dem jeweiligen Umfangserstreckungsabschnitt 13 nachgeordneten Querrille 10 mit einem geänderten Verlauf der Rillentiefe t_{U} ausgebildet. In Drehrichtung D unmittelbar im Anschluss an die dem Erstreckungsabschnitt 13 vorgeordnete Querrille 10 ist der Rillengrund 14 mit maximalem radialem Abstand t_{Umax} von der radial äußeren Oberfläche 17 und die Umfangsrille 12 somit mit ihrer maximalen Tiefe t_{Umax} ausgebildet. Mit dieser maximalen Tiefe t_{Umax} erstreckt sich die Umfangsrille 12 längs der Erstreckung des Erstreckungsabschnitts 13 in Richtung zu der dem Erstreckungsabschnitt 13 nachgeordneten Querrille 10 bis zu einer im mittleren Erstreckungsbereich des Erstreckungsabschnitts 13 ausgebildeten Stufe 16 im Rillengrund 14, in welcher der Rillengrund 14 um die Höhe h_{S} stufenhaft in radialer Richtung R angehoben wird. Ausgehend von der Stufe 16 erstreckt sich der Rillengrund 14 in Drehrichtung D in konstantem, in radialer Richtung R gemessenem minimalem Abstand t_{Umin} zur radial äußeren Oberfläche 17 und die Umfangsrille 12 somit mit ihrer minimalen Tiefe t_{Umin} bis zur Einmündung in die dem Erstreckungsabschnitt 13 nachgeordnete Querrille 10.

Wie in Fig. 3 zu erkennen ist, ist der dieser Querrille 10 in Drehrichtung D nachgeordnete Erstreckungsabschnitt 13 ausgehend von dieser Querrille 10 bis zu einer Stufe 13 wieder zunächst mit der maximalen Tiefe t_{Umax} ausgebildet. In der Stufe 13 ist der Rillengrund 14 um die Höhe h_{S} angehoben und erstreckt sich dann ausgehend von der Stufe 13 längs der Erstreckung in Drehrichtung D wiederum mit der Tiefe t_{Umin} bis zu der diesem Erstreckungsabschnitt 13 in Drehrichtung D wieder nachgeordneten Querrille 10.

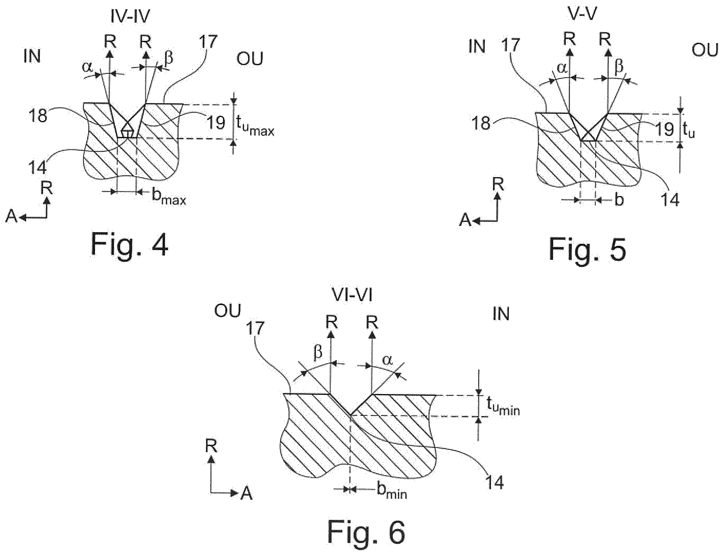

Wie den Fig. 4, 5 und 6 zu entnehmen ist, wird die Umfangsrille 12 in den Erstreckungsabschnitten 13 jeweils in axialer Richtung A zu der zur Fahrzeuginnenseite hin ausgebildeten Reifeninnenschulter IN durch eine Flanke 18 und zu der zur Fahrzeugaußenseite OU hinweisenden axialen Richtung mit einer Flanke 19 begrenzt. Die Flanken 18 und 19 erstrecken sich jeweils aus dem Rillengrund 14 in radialer Richtung R nach außen bis zur radial äußeren Oberfläche 17 der durch sie begrenzten Profilblockreihe 1 bzw. 2. In den die Reifenachse aufweisenden Schnittebenen sind die Flanken 18 und 19 jeweils geradlinig erstreckt ausgebildet. Die Flanke 18 ist dabei in ihrem Schnitt, welcher die Reifenachse aufweist, unter einem Neigungswinkel α zur radialen Richtung R geneigt ausgebildet und dabei längs ihrer Erstreckung in radialer Richtung R nach außen gesehen zur Innenschulter IN hin geneigt ausgebildet. Die Flanke 19 ist ihrem Schnitt, welcher die Reifenachse aufweist, unter einem Neigungswinkel β zur radialen Richtung R geneigt ausgebildet und dabei längs ihrer Erstreckung in radialer Richtung R nach außen gesehen zur Außenseite OU hin geneigt ausgebildet. Längs der Erstreckung der Umfangsrille 12 in Drehrichtung D in einem Erstreckungsabschnitt 14nimmt dabei jeweils ausgehend von der einem Erstreckungsabschnitt 13 in Drehrichtung D vorgeordneten Querrille 10 bis zu der dem Erstreckungsabschnitt 13 in Drehrichtung D nachgeordneten Querrille 10 sowohl der Neigungswinkel α als auch der Neigungswinkel β jeweils kontinuierlich zu. Die Flanke 18 bildet längs der Erstreckung der Umfangsrille 12 in ihrer Schnittkonturlinie 20 mit der radial äußeren Oberfläche 17 eine geradlinig in Umfangsrichtung U des Fahrzeugluftreifens erstreckte Schnittkontur. Die Flanke 19 bildet ebenso längs der Erstreckung der Umfangsrille 12 in ihrer Schnittkonturlinie 21 mit der radial äußeren Oberfläche 17 eine geradlinig in Umfangsrichtung erstreckt ausgebildete Schnittkontur.

Hierdurch ist die Umfangsrille 12 in der radial äußeren Oberfläche 17 jeweils in den zwischen zwei in Umfangsrichtung U hintereinander angeordneten Querrillen 10 ausgebildeten Erstreckungsabschnitten 13 längs ihrer Erstreckung mit einer konstanten in axialer Richtung A gemessenen Breite ausgebildet. Dabei ist die Umfangsrille 12 radial innerhalb der radial äußeren Oberfläche 17 über ihre gesamte radialen Erstreckung bis zum Rillengrund 14 hinweg mit einer längs der Erstreckung der Umfangsrille 12 im Erstreckungsabschnitt 13 ausgehend von der in Drehrichtung D dem Erstreckungsabschnitt 13 vorgeordneten Querrille 12 in Drehrichtung D gesehen bis zu der in Drehrichtung D dem Erstreckungsabschnitt 13 nachgeordneten Querrille 10 mit einer kontinuierlich abnehmender Rillenbreite ausgebildet. Die maximale Veränderung der Rillenbreite ist in dem in radialer Richtung R unmittelbar außerhalb an den Rillengrund 14 anschließenden radialen Erstreckungsbereich der Umfangsrille 12 ausgebildet. Fig. 6 kann entnommen werden, dass der Erstreckungsabschnitt 13 jeweils in der Position der Einmündung in die in Drehrichtung D nachgeordnete Querrille 10 ihren Minimalwert bₘᵢₙ der direkt oberhalb des Rillengrundes 14 gemessenen Rillenbreite b aufweist. Ausgehend von dieser Umfangsposition nimmt längs der Erstreckung des Erstreckungsabschnitts 13 entgegen der Drehrichtung D die direkt oberhalb des Rillengrundes 14 gemessene Breite bis zur Einmündung in die dem Erstreckungsabschnitt vorgeordnete Querrille 10 zu. Fig. 4 kann entnommen werden, dass der Erstreckungsabschnitt 13 jeweils in der Position der Einmündung in die in Drehrichtung D vorgeordnete Querrille 10 ihren Maximalwert bₘₐₓ der direkt oberhalb des Rillengrundes 14 gemessenen Rillenbreite aufweist.

Die direkt oberhalb des Rillengrundes 14 gemessene maximale Rillenbreite ist mit bₘₐₓ ≤9mm ausgebildet. Die direkt oberhalb des Rillengrundes 14 gemessene minimale Rillenbreite ist mit bₘᵢₙ ≤0,1mm ausgebildet.

In dem dargestellten Ausführungsbeispiel ist die Rillenbreite b in der Position der Einmündung in die in Drehrichtung D nachgeordnete Querrille 10 zu einem Punkt verjüngt und der Minimalwert bₘᵢₙ mit bₘᵢₙ =0mm ausgebildet.

Die Winkel α und β sind innerhalb eines Erstreckungsbereichs ausgebildet mit 0°≤ β ≤ 60° und mit 0°≤ α ≤ 60°.

Die zwischen den in Umfangsrichtung U hintereinander angeordneten bis in die Umfangsrille 4 erstreckten Querrillen 10 unterteilen das Profilband 1 in eine Vilezahl von in Umfangsrichtung U hintereinander angeordneten Makroblöcken 11.

Die Tiefe t_{Umin} ist mit t_{Umin} < t_{Umax} ausgebildet. Die Tiefe t_{Umax} ist mit (1/3)P_{T}≤t_{Umax}≤(2/3)P_{T} ausgebildet, beispielsweise ist t_{Umax} = (P_{T}/2) ausgebildet. Die Tiefe t_{Umin} ist mit 1 mm ≤ t_{Umin} ≤ (1/3)P_{T} ausgebildet.

Die Höhe der Stufe h_{S} ist mit 1 mm ≤ h_{S} ≤3 mm ausgebildet, beispielsweise mit h_{S}=1mm.

Die Umfangsrille 12 ist in der radial äußeren Oberfläche 17 mit ihrer maximalen Breite b_{UI} ausgebildet, welche zwischen 3 mm und 9 mm, beispielsweise mit 5 mm, ausgebildet ist. Die Umfangsrille 12 ist unmittelbar im Anschluss an die dem Umfangsabschnitt 13 vorgeordnete Querrille 10 im Bereich des Rillengrundes 14 mit der maximalen Breite bₘₐₓ ausgebildet mit bₘₐₓ ≤ b_{UI}. Beispielsweise ist die Breite b_{UI} in der radial äußeren Oberfläche 17 mit b_{UI} = 5 mm ausgebildet und die Breite bₘₐₓ =4mm ausgebildet.

In einem nicht dargestellten Ausführungsbeispiel steigt der Rillengrund 14 zwischen der einem Umfangserstreckungsabschnitt 13 in Drehrichtung D vorgeordneten Querrille 10 und der Stufe 16 ausgehend von der maximalen Tiefe t_{Umax} kontinuierlich leicht an und im Anschluss an die Stufe 16 bis zu der dem Erstreckungsbereich 13 nachgeordneten Querrille 10 ebenfalls kontinuierlich bis zum Erreichen der minimalen Tiefe t_{Umin}, welche bei der Einmündung in die nachgeordnete Querrille erreicht wird, leicht an.

### Bezugszeichenliste

### (Teil der Beschreibung)

- 1: Profilband
- 2: Profilblockreihe
- 3: Profilblockreihe
- 4: Umfangsrille
- 5: Umfangsrippe
- 6: Umfangsrille
- 7: Umfangsrippe
- 8: Umfangsrille
- 9: Umfangsrippe
- 10: Querrille
- 11: Profilblockelement
- 12: Umfangsrille
- 13: Abschnitt
- 14: Rillengrund
- 15: Rillengrund
- 16: Stufe
- 17: Radial äußere Oberfläche
- 18: Flanke
- 19: Flanke

## Patentansprüche

1. Fahrzeugluftreifen für Personenkraftwagen mit einem profilierten Laufstreifen mit einer für den Einsatz am Fahrzeug ausgebildeten, vom Fahrzeug wegweisenden Außenschulter OU und mit zum Fahrzeug hinweisenden Innenschulter IN, mit durch Rillen (4,5,8) von einander beabstandeten Profilbändern (1,5,7,9), beispielsweise Profilrippen oder Profilblockreihen, mit einer in der Außenschulter OU ausgebildeten über den Umfang des Reifens erstreckten Umfangsrille (12), welche zwei Profilblockreihen (2,3) axial voneinander trennt, und mit über den Umfang des Reifens hintereinander angeordneten Querrillen (10), die sich jeweils mit einer in radialer Richtung R gemessenen Tiefe T_{Q} in axialer Richtung A von der einen Profilblockreihe (1) über die Umfangsrille (12) hinweg in die andere Profilblockreihe (2) erstrecken, wobei die Tiefe T_{Q} größer ist als die Tiefe T_{U} der Umfangsrille (12) im Erstreckungsbereich (13) zwischen den Querrillen (10), **dadurch gekennzeichnet,**
**dass** die Umfangsrille (12) jeweils in den Erstreckungsabschnitten (13) zwischen den in Umfangsrichtung U benachbarten Querrillen (10) längs der Erstreckung in die eine Drehrichtung D des Reifens ausgehend von der in Drehrichtung D vorgeordneten Querrille (10) bis zur in Drehrichtung D nachgeordneten Querrille (10) ausgehend von einer maximalen Tiefe t_{UMax} mit einer durch treppenartige Anhebung des Rillengrundes (14) mit wenigstens einer Stufe (16) ausgebildeten Reduktion der Tiefe t_{U} bis zu einer minimalen Tiefe t_{UMin} und mit einer im radial inneren Erstreckungsabschnitt der Umfangsrille (12) der Erstreckungshöhe h mit h < t_{U} stetig abnehmenden Breite b der Rille ausgebildet ist.

2. Fahrzeugluftreifen gemäß den Merkmalen von Anspruch 1,
bei dem längs der Erstreckung der Umfangsrille (12) in diese Drehrichtung D die Breite b der Umfangsrille (12) in der Position der Querrille (10) sprunghaft vergrößert ist.

3. Fahrzeugluftreifen gemäß den Merkmalen von Anspruch 1 oder 2,
wobei die Umfangsrille (12) in axialer Richtung A zur Außenschulter OU von einer ersten Flanke (19) und zur Innenschulter IN hin von einer zweiten Flanke (18) begrenzt wird,
wobei die Umfangsrille (12) in den zwischen benachbarten Querrillen (10) ausgebildeten Umfangsabschnitten (13) in komplanar zur Reifenachse ausgebildeten Querschnittebenen mit ihrer ersten Flanke (19) einen Neigungswinkel β zur Radialen mit 0°≤β≤60° und mit ihrer zweiten Flanke (18) einen Neigungswinkel α zur Radialen mit 0°≤α≤60° einschließt.

4. Fahrzeugluftreifen gemäß den Merkmalen von einem der vorangegangenen Ansprüche,
wobei die Umfangsrille (12) in axialer Richtung zur Außenschulter OU von einer ersten Flanke und zur Innenschulter IN hin von einer zweiten Flanke begrenzt wird, wobei die Umfangsrille (12) in den zwischen benachbarten Querrillen (10) ausgebildeten Umfangsabschnitten in komplanar zur Reifenachse ausgebildeten Querschnittebenen mit ihren ersten Flanke einen Neigungswinkel β zur Radialen und mit ihrer zweiten Flanke einen Neigungswinkel α zur Radialen einschließt, wobei wenigstens einer der beiden Neigungswinkel - insbesondere beide Neigungswinkel - längs der Erstreckung zwischen den Querrillen(10) stetig verändert sind.

5. Fahrzeugluftreifen gemäß den Merkmalen von einem der vorangegangenen Ansprüche,
wobei die Umfangsrille (12) in axialer Richtung zur Außenschulter OU von einer ersten Flanke und zur Innenschulter IN hin von einer zweiten Flanke begrenzt wird, wobei eine der beiden Flanken - insbesondere beide Flanken - in der radial äußeren, die Profilblockreihen nach radial außen begrenzenden Oberfläche jeweils zwischen den benachbarten Querrillen (10) geradlinig in Umfangsrichtung erstreckt ausgebildet sind.

6. Fahrzeugluftreifen gemäß den Merkmalen von einem der vorangegangenen Ansprüche,
wobei die Umfangsrille (12) jeweils in den Erstreckungsabschnitten zwischen den in Umfangsrichtung benachbarten Querrillen (10) längs der Erstreckung in die eine Drehrichtung des Reifens ausgehend von der in Drehrichtung vorgeordneten Querrille (10) bis zur nachgeordneten Querrille (10) ausgehend von einer maximalen Tiefe t_{UMax} mit einer durch treppenartige Anhebung des Rillengrundes mit maximal zwei Stufen (16) ausgebildeten Reduktion der Tiefe t_{U} bis zu einer minimalen Tiefe t_{UMin} ausgebildet ist.

7. Fahrzeugluftreifen gemäß den Merkmalen von einem der vorangegangenen Ansprüche,
wobei die Tiefe T_{Q} mit T_{Q} = P_{T} ausgebildet ist, wobei die P_{T} Profiltiefe ist.

8. Fahrzeugluftreifen gemäß den Merkmalen von einem der vorangegangenen Ansprüche,
wobei die Tiefe T_{UMax} mit (1/3)P_{T} ≤ T_{UMax} ≤ (2/3) P_{T} ausgebildet ist.

9. Fahrzeugluftreifen gemäß den Merkmalen von einem der vorangegangenen Ansprüche,
wobei die Tiefe T_{UMin} mit 1mm ≤ T_{UMin} ≤ (1/3) P_{T} ausgebildet ist.

10. Fahrzeugluftreifen gemäß den Merkmalen von einem der vorangegangenen Ansprüche,
wobei die Stufe (16) der treppenartige Anhebung des Rillengrundes mit einer Stufenhöhe tₛ mit 1mm ≤ tₛ ≤ 3mm ausgebildet ist.

11. Fahrzeugluftreifen gemäß den Merkmalen von einem der vorangegangenen Ansprüche,
wobei der Rillengrund der Umfangsrille (12) im Erstreckungsbereich zwischen den Querrillen(10) in Drehrichtung gesehen ausgehend von der vorgeordneten Querrille (10) bis zur Stufe (16) und von der Stufe (16) bis zur nachgeordneten Querrille (10) kontinuierlich ansteigt.

## Claims

1. Pneumatic vehicle tyre for passenger cars with a profiled tread, with an outer shoulder OU designed for use on the vehicle, facing away from the vehicle, and an inner shoulder IN, facing towards the vehicle, with profile bands (1, 5, 7, 9), for example profile ribs or rows of profile blocks, spaced apart from one another by grooves (4, 5, 8), with a circumferential groove (12), which is formed in the outer shoulder OU, is made to extend over the circumference of the tyre and axially separates two rows of profile blocks (2, 3) from one another, and with transverse grooves (10) which are arranged one behind the other over the circumference of the tyre and each extend in the axial direction A away from the one row of profile blocks (1) into the other row of profile blocks (2), across the circumferential groove (12), with a depth T_{Q} measured in the radial direction R, the depth T_{Q} being greater than the depth Tu of the circumferential groove (12) in the region of extent (13) between the transverse grooves (10), **characterized**
**in that**, in the portions of extent (13) between the transverse grooves (10) adjacent to one another in the circumferential direction U, the circumferential groove (12) is respectively formed along the extent in the one direction of rotation D of the tyre with a reduction of the depth tu, starting from the transverse groove (10) arranged in front in the direction of rotation D to the transverse groove (10) arranged behind in the direction of rotation D and formed by a staircase-like raising of the groove base (14) with at least one step (16), from a maximum depth t_{UMax} to a minimum depth t_{UMin} and is respectively formed with a width b of the groove steadily decreasing in the radially inner portion of extent of the circumferential groove (12) of the height of extent h with h < t_{U}.

2. Pneumatic vehicle tyre according to the features of Claim 1,
in which, along the extent of the circumferential groove (12), in this direction of rotation D the width b of the circumferential groove (12) is increased abruptly in the position of the transverse groove (10).

3. Pneumatic vehicle tyre according to the features of Claim 1 or 2,
the circumferential groove (12) being bounded in the axial direction A with respect to the outer shoulder OU by a first flank (19) and with respect to the inner shoulder IN by a second flank (18), the circumferential groove (12) forming in the circumferential portions (13) that are formed between adjacent transverse grooves (10), in cross-sectional planes formed coplanar with the tyre axis, with their first flank (19) an angle of inclination β to the radial where 0° ≤ β ≤ 60° and with their second flank (18) an angle of inclination α to the radial where 0° ≤ α ≤ 60°.

4. Pneumatic vehicle tyre according to the features of one of the preceding claims,
the circumferential groove (12) being bounded in the axial direction with respect to the outer shoulder OU by a first flank and with respect to the inner shoulder IN by a second flank,
the circumferential groove (12) forming in the circumferential portions that are formed between adjacent transverse grooves (10), in cross-sectional planes formed coplanar with the tyre axis, with their first flank an angle of inclination β to the radial and with their second flank an angle of inclination α to the radial, at least one of the two angles of inclination - in particular both angles of inclination - being steadily changed along the extent between the transverse grooves (10).

5. Pneumatic vehicle tyre according to the features of one of the preceding claims,
the circumferential groove (12) being bounded in the axial direction with respect to the outer shoulder OU by a first flank and with respect to the inner shoulder IN by a second flank,
one of the two flanks - in particular both flanks - being formed so as to extend in a straight line in the circumferential direction in the radially outer surface, bounding the rows of profile blocks radially outwards, respectively between the adjacent transverse grooves (10).

6. Pneumatic vehicle tyre according to the features of one of the preceding claims,
in the portions of extent between the transverse grooves (10) adjacent to one another in the circumferential direction, the circumferential groove (12) being respectively formed along the extent in the one direction of rotation of the tyre with a reduction of the depth tu, starting from the transverse groove (10) arranged in front in the direction of rotation to the transverse groove (10) arranged behind and formed by a staircase-like raising of the groove base with a maximum of two steps (16), from a maximum depth t_{UMax} to a minimum depth t_{UMin}.

7. Pneumatic vehicle tyre according to the features of one of the preceding claims,
the depth T_{Q} being formed with T_{Q} = P_{T}, where P_{T} is the profile depth.

8. Pneumatic vehicle tyre according to the features of one of the preceding claims,
the depth T_{UMax} being formed with (1/3) P_{T} ≤ T_{UMax} ≤ (2/3) P_{T}.

9. Pneumatic vehicle tyre according to the features of one of the preceding claims,
the depth T_{UMin} being formed with 1mm ≤ T_{UMin} ≤ (1/3)P_{T}.

10. Pneumatic vehicle tyre according to the features of one of the preceding claims,
the step (16) of the staircase-like raising of the groove base being formed with a step height tₛ where 1mm ≤ tₛ ≤ 3mm.

11. Pneumatic vehicle tyre according to the features of one of the preceding claims,
the groove base of the circumferential groove (12) in the region of extent between the transverse grooves (10) rising continuously from the transverse groove (10) arranged in front to the step (16) and from the step (16) to the transverse groove (10) arranged behind, seen in the direction of rotation.

## Revendications

1. Pneumatique de véhicule pour automobile particulière, comportant une bande de roulement profilée avec un épaulement extérieur OU conçu pour être utilisé sur le véhicule et détourné du véhicule et un épaulement intérieur IN tourné vers le véhicule, des bandes profilées (1, 5, 7, 9) espacées les unes des autres par des rainures (4, 5, 8), par exemple des nervures profilées ou des rangées de blocs profilés, une rainure circonférentielle (12) formée dans l'épaulement extérieur OU et s'étendant sur la circonférence du pneumatique et qui sépare axialement deux rangées de blocs profilés (2, 3) l'une de l'autre et des rainures transversales (10) disposées les unes derrière les autres sur la circonférence du pneumatique et qui s'étendent respectivement, à une profondeur T_{Q} mesurée dans le sens radial R, dans le sens axial A d'une rangée de blocs profilés (1) s'étendant au-delà de la rainure circonférentielle (12) dans l'autre rangée de blocs profilés (2), la profondeur T_{Q} étant supérieure à la profondeur T_{U} de la rainure circonférentielle (12) dans la zone d'extension (13) entre les rainures transversales (10), **caractérisé en ce que**
la rainure circonférentielle (12) est réalisée respectivement dans les sections d'extension (13) entre les rainures transversales (10) adjacentes dans le sens circonférentiel U le long de l'extension dans le sens de rotation D du pneumatique en partant de la rainure transversale (10) précédente dans le sens de rotation D jusqu'à la rainure transversale (10) suivante dans le sens de rotation D en partant d'une profondeur maximale t_{UMax} avec une réduction effectuée par une élévation en forme d'escalier du fond de la rainure (14) d'au moins un niveau (16) de la profondeur tu jusqu'à une profondeur minimale t_{UMin} et avec une section d'extension radialement intérieure de la rainure circonférentielle (12) de la hauteur d'extension h, sachant que h < t_{U}, avec une largeur b de la rainure diminuant constamment.

2. Pneumatique de véhicule selon les caractéristiques de la revendication 1,
dans lequel, le long de l'extension de la rainure circonférentielle (12) dans ce sens de rotation D,
la largeur b de la rainure circonférentielle (12) dans la position de la rainure transversale (10) augmente par à-coups.

3. Pneumatique de véhicule selon les caractéristiques de la revendication 1 ou 2,
dans lequel la rainure circonférentielle (12) est limitée dans le sens axial A vers l'épaulement extérieur OU par un premier flanc (19) et vers l'épaulement intérieur IN par un second flanc (18),
la rainure circonférentielle (12) circonscrit, dans les sections circonférentielles (13) formées entre des rainures transversales adjacentes (10), dans des plans de section transversale formés de manière coplanaire par rapport à l'axe du pneumatique, par son premier flanc (19) un angle d'inclinaison β par rapport à la radiale de 0°≤β≤ 60° et par son second flanc (18) un angle d'inclinaison α par rapport à la radiale de 0°≤α≤ 60°.

4. Pneumatique de véhicule selon les caractéristiques d'une des revendications précédentes,
dans lequel la rainure circonférentielle (12) est limitée dans le sens axial vers l'épaulement extérieur OU par un premier flanc et vers l'épaulement intérieur IN par un second flanc,
la rainure circonférentielle (12) circonscrit, dans les sections circonférentielles formées entre des rainures transversales adjacentes (10), dans des plans de section transversale formés de manière coplanaire par rapport à l'axe du pneumatique, par son premier flanc un angle d'inclinaison β par rapport à la radiale et par son second flanc un angle d'inclinaison α par rapport à la radiale, au moins un des deux angles d'inclinaison - en particulier les deux angles d'inclinaison - variant constamment le long de l'extension entre les rainures transversales (10).

5. Pneumatique de véhicule selon les caractéristiques d'une des revendications précédentes,
dans lequel la rainure circonférentielle (12) est limitée dans le sens axial vers l'épaulement extérieur OU par un premier flanc et vers l'épaulement intérieur IN par un second flanc,
un des deux flancs - en particulier les deux flancs - étant conçus pour s'étendre en ligne droite dans le sens circonférentiel dans la surface radialement extérieure limitant les rangées de blocs profilés radialement vers l'extérieur respectivement entre les rainures transversales adjacentes (10).

6. Pneumatique de véhicule selon les caractéristiques d'une des revendications précédentes,
dans lequel la rainure circonférentielle (12) est formée respectivement dans les sections d'extension entre les rainures transversales (10) adjacentes dans le sens circonférentiel le long de l'extension dans un sens de rotation du pneumatique en partant de la rainure transversale précédente (10) dans le sens de rotation jusqu'à la rainure transversale suivante (10) en partant d'une profondeur maximale t_{UMax} avec une réduction de la profondeur t_{U} par une élévation en forme d'escalier du fond de la rainure de deux niveaux (16) au maximum jusqu'à une profondeur minimale t_{UMin}.

7. Pneumatique de véhicule selon les caractéristiques d'une des revendications précédentes,
dans lequel la profondeur T_{Q} est définie par T_{Q} = P_{T}, P_{T} étant la profondeur du profilé.

8. Pneumatique de véhicule selon les caractéristiques d'une des revendications précédentes,
dans lequel la profondeur TUMax est définie par (1/3) P_{T} ≤ T_{UMax} ≤ (2/3) P_{T}.

9. Pneumatique de véhicule selon les caractéristiques d'une des revendications précédentes,
dans lequel la profondeur T_{UMin} est définie par 1 mm ≤ T_{UMin} ≤ (1/3)P_{T}.

10. Pneumatique de véhicule selon les caractéristiques d'une des revendications précédentes, dans lequel le niveau (16) de l'élévation en forme d'escalier du fond de la rainure est défini à une hauteur de niveau tₛ par 1 mm ≤ tₛ ≤ 3 mm.

11. Pneumatique de véhicule selon les caractéristiques d'une des revendications précédentes,
dans lequel le fond de rainure de la rainure circonférentielle (12), dans la zone d'extension entre les rainures transversales (10), vu dans le sens de rotation en partant de la rainure transversale précédente (10) jusqu'au niveau (16) et du niveau (16) jusqu'à la rainure transversale suivante (10), monte en continu.
